**Europäisches Patentamt**

**European Patent Office**

**Office européen des brevets**

(19)

(11) Veröffentlichungsnummer: **0 185 610 B1**

(12) **EUROPÄISCHE PATENTSCHRIFT**

(45) Veröffentlichungstag der Patentschrift: **10.04.91**

(51) Int. Cl.⁵: **H04B 5/00**, H04L 5/14, H04L 27/18

(21) Anmeldenummer: **85730170.9**

(22) Anmeldetag: **20.12.85**

(54) Einrichtung zur berührungslosen Signal- und Energieübertragung.

(30) Priorität: **21.12.84 DE 3447560**

(43) Veröffentlichungstag der Anmeldung:
**25.06.86 Patentblatt 86/26**

(45) Bekanntmachung des Hinweises auf die
Patenterteilung:
**10.04.91 Patentblatt 91/15**

(84) Benannte Vertragsstaaten:
**AT CH DE FR GB IT LI NL SE**

(56) Entgegenhaltungen:
**CH-A- 563 046**
**DE-A- 2 658 499**

(73) Patentinhaber: **Angewandte Digital Elektronik GmbH**
**Bundesstrasse 25**
**W-2051 Brunstorf(DE)**

(72) Erfinder: **Jenning, Michael**
**Oberer Landweg 112**
**W-2050 Hamburg 80(DE)**
Erfinder: **Mackenthun, Holger**
**Eilswiese 6**
**W-2000 Hamburg 65(DE)**

**Beschreibung**

Die Erfindung betrifft eine Einrichtung zur berührungslosen Daten und Energieübertragung, bestehend aus einem unbeweglichen Teil (Mikrostation) und einem beweglichen Teil (Mikroeinheit).

Eine solche Einrichtung nur für Datenübertragung ist aus der CH-A-563046 bekannt. Die Datenübertragung erfolgt über spulen. Es wird keine Phasenverschiebung benutzt.

Der Erfindung liegt die Aufgabe zugrunde, Informationen und Energie berührungslos, d.h. kontaktfrei, von dem unbewegten Teil auf ein bewegbares Teil zu übertragen. Die Mikrostation, d.h. das unbewegbare Teil soll dabei auch die Leistung für die Mikroeinheit, d.h. das bewegbare Teil, zur Verfügung stellen. Wesentlich ist, daß eine derartige Einrichtung eine Reihe von Anforderungen erfüllen muß. Hierzu gehört zunächst einmal, daß die Mikroeinheit unabhängig von ihrer räumlichen Lage sowohl Daten und Energie empfangen, wie auch Daten senden können muß. Darüber hinaus muß der Datenempfang der Mikroeinheit auch während der Zeiten funktionieren, da von der Mikroeinheit zur Mikrostation Daten gesendet werden. Der Datenempfang soll schließlich unabhängig von der elektrischen Belastung der Schaltkreise auf der Mikroeinheit funktionieren und schließlich ist es wesentlich, daß Amplitudenschwankungen aufgrund der Änderung der Übertragungsstrecke oder aufgrund von Temperatureinflüssen oder sonstigen Einflüssen, keine Einwirkung auf die Datenübertragung haben.

Gelöst wird diese Aufgabe erfindungsgemäß mit den Merkmalen des Patentanspruchs.

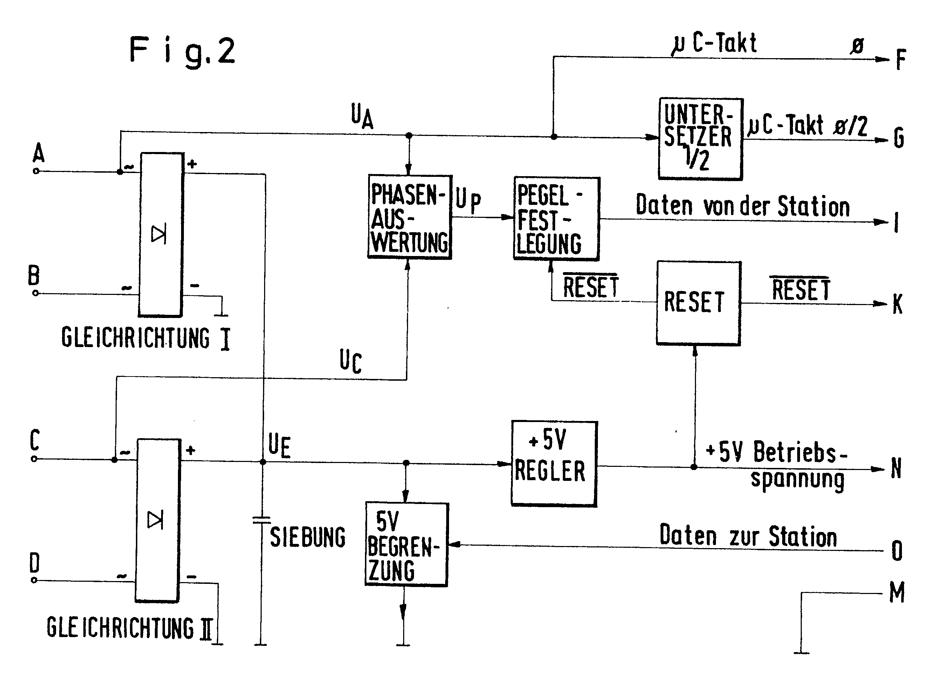

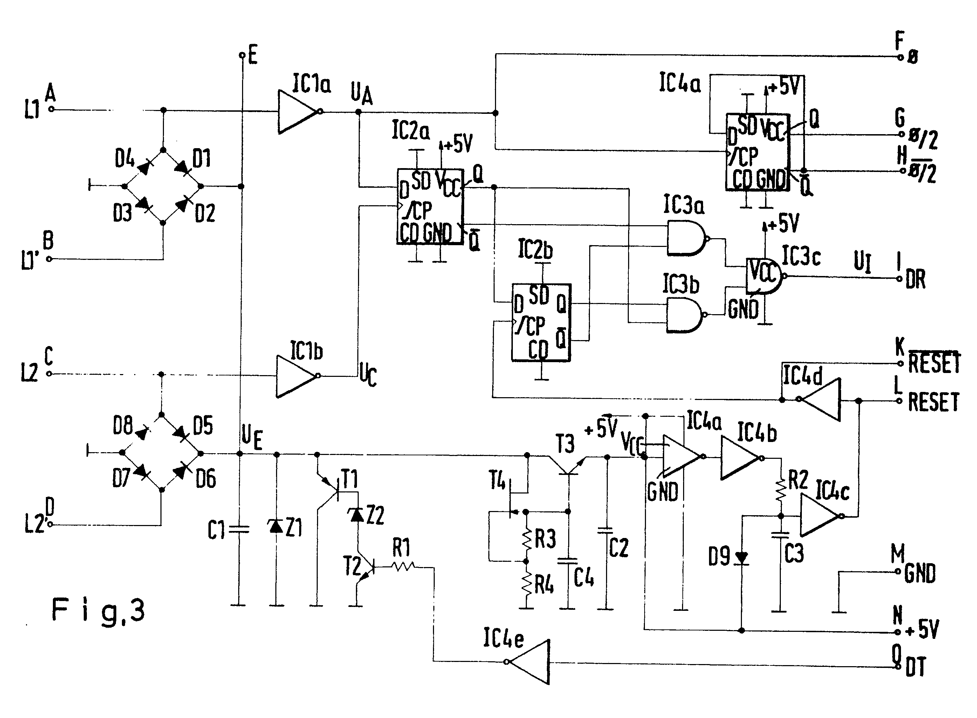

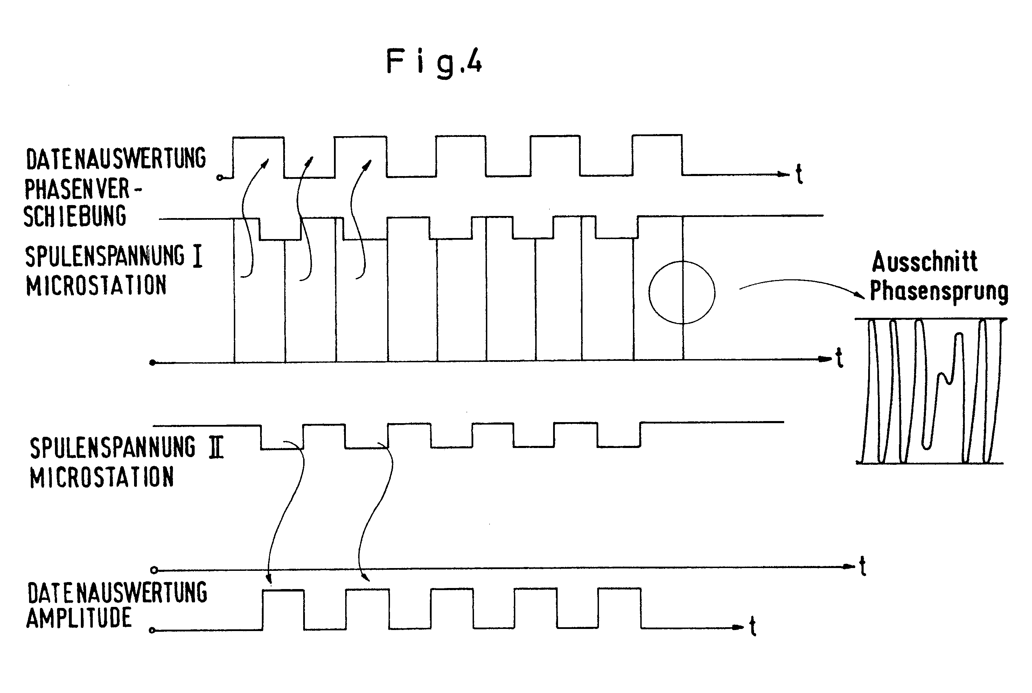

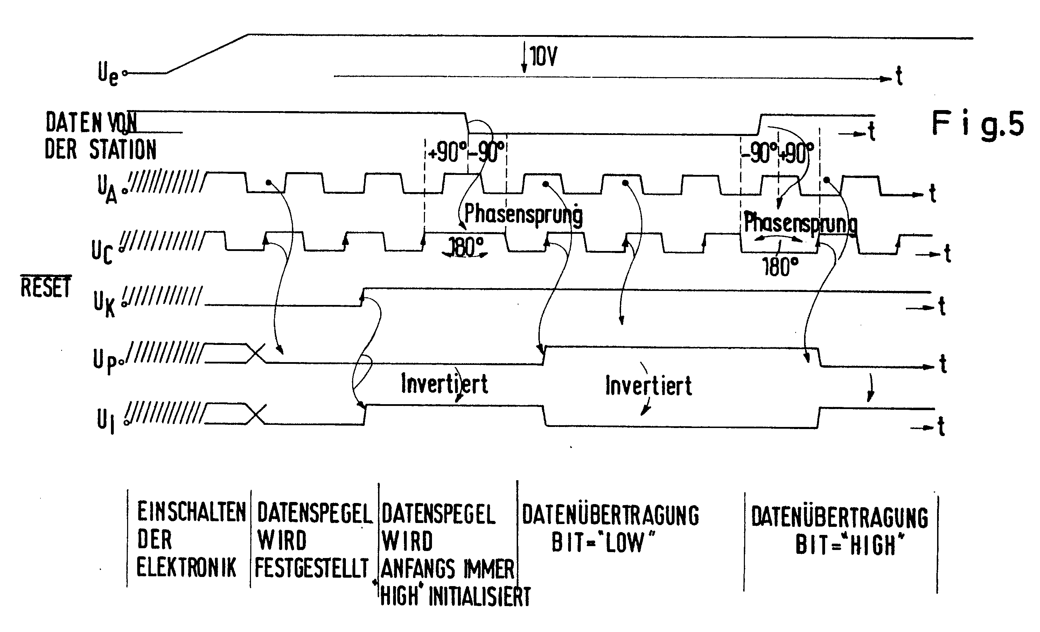

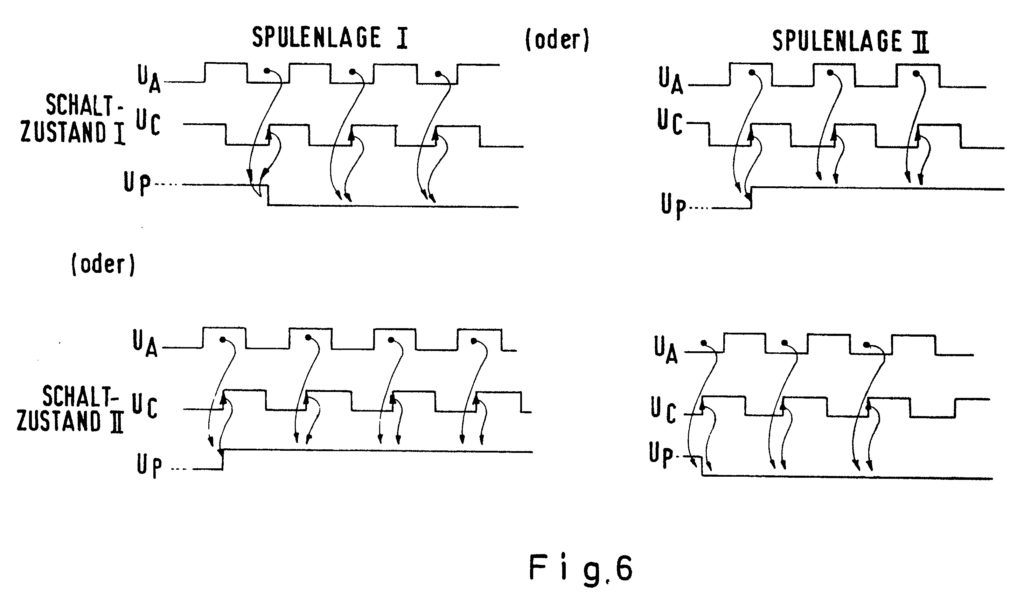

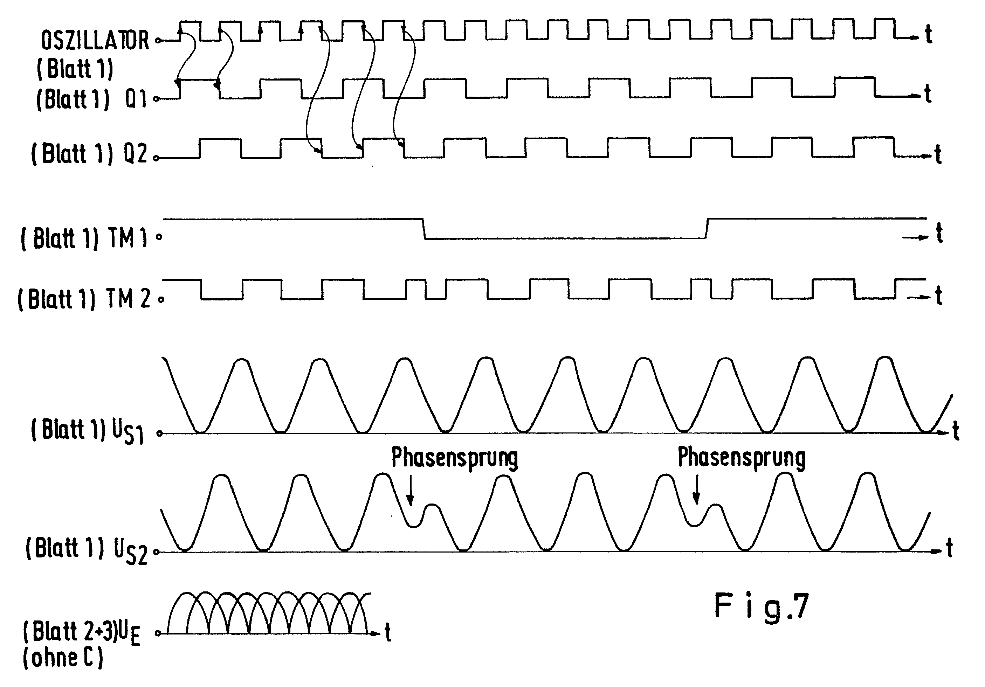

Die Erfindung soll nachfolgend anhand der Zeichnungen erläutert werden, wobei Bild 1 das Blockschaltbild der Mikrostation und der Mikroeinheit zeigt, Figur 2 das Interface, Figur 3 den Stromlaufplan für das Interface, Figur 4 bis 7 zeigen Zeitdiagramme.

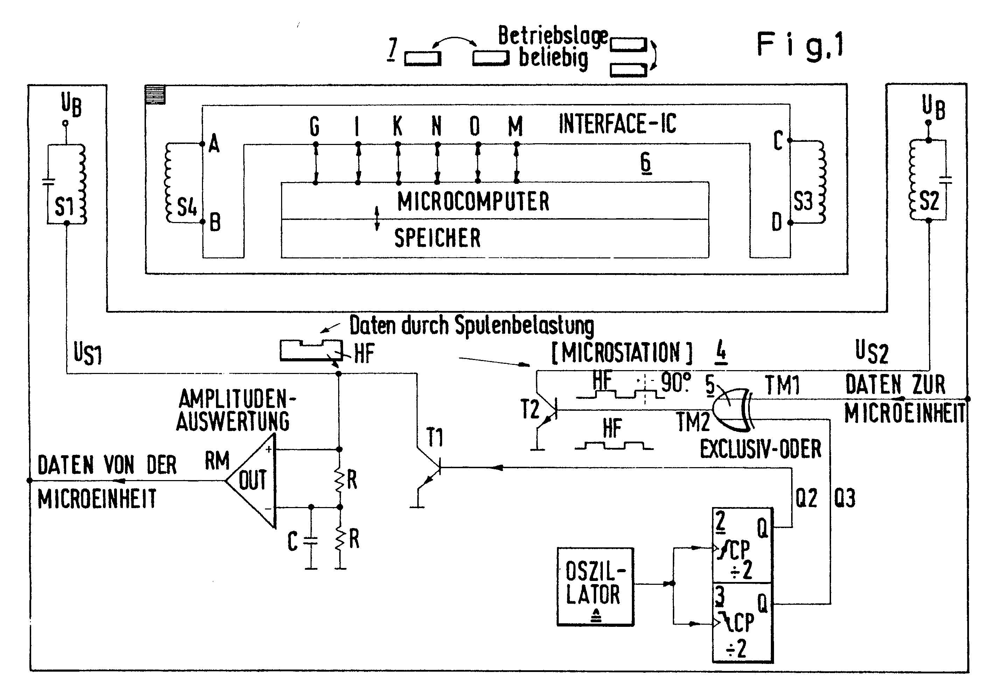

In der Figur 1 ist, wie angegeben, die Mikrostation wie auch die Mikroeinheit dargestellt Aus dieser Blockschaltung ergibt sich folgendes.

Von einem Oszillator 1 wird jeweils über ein Flip-Flop 2 und 3 über eine positive bzw. negative Flankensteuerung die Hälfte der Oszillatorfrequenz an den Ausgängen Q2, Q3 zur Verfügung gestellt. Derart ist gewährleistet, daß es sich bei dieser elektromagnetischen Welle um einen kohärenten (zusammenhängenden) Wellenzug (gleiche Frequenz) handelt, welche auch bei einer räumlichen, berührungslosen (drahtlos, kontaktlos) Übertragung erhalten bleibt. Q2, Q3 sind über die Transistoren T1, T2 mit den Spulen S1, S2 verbunden, welche berührungslos mit den Spulen S3, S4 gekoppelt sind, welche aus dem beweglichen Teil der Mikroeinheit 6 untergebracht sind. Die Mikroeinheit ist räumlich beliebig drehbar, wie es unter 7 symbolisch angeführt ist, in allen Fällen wird über S3, S4 das jeweils kohärente Signal des Oszillator 1 empfangen.

Die Kohärenz wird nun gestört, indem Q3 eine 180 Grad Phasenverschiebung aufgezwungen wird. Hierzu wird das Signal Q3 dem Exklusiv-ODER-GATTER 5 zugeführt, wobei am anderen Eingang dieses Gatters das zu übertragende Signal TM1 liegt. Die Signalverläufe sind in Blatt dargestellt. Durch die jeweilige HIGH- oder LOW-Stellung des TM1-Signals wird am Exklusiv-ODER-GATTER erreicht, daß der Ausgang TM2 um +/- 90 Grad gegenüber Q2 phasenverschoben wird. Diese Phasenverschiebung wird über T2 an S2 weitergegeben und bedeutet auch eine Phasenverschiebung in Relation zu T1 und S1.

Der nähere Aufbau der Mikroeinheit 6 ist in Blatt 2 und und Blatt 3 gezeichnet. Die Punkte A,B und C,D aus Blatt 2 und Blatt 3 entsprechen den Punkten A,B und C,D der Mikroeinheit 6 . Im unteren Teil von Blatt 2 ist die Datenübertragung zur Mikrostation 4 nach dem Prinzip des Synchronschalters dargestellt, im oberen Teil die Datenübertragung von der Mikrostation zur Mikroeinheit, nach dem Prinzip der Phasenverchiebung. Beide Spannungen UC, UA werden direkt von den Spulen an den Punkten A bzw. C abgegriffen und werden einer Phasenauswertung zugeführt, welche hier aus einem D-Flip-Flop (D-FFI) besteht. Unabhängig welches Signal, UA oder UB, den Phasensprung enthält, d.h. welche räumliche Zuordnung der Spulen der Mikrostation zur Mikroeinheit vorlag, wird eine Phasenverschiebung, wie sie aufgrund des oben geschilderten Verfahrens in der Datenstation erzeugt wurde, auf Seiten der Mikroeinheit im D-FFI nachgewiesen. Die Signalverhältnisse sind in Blatt 5 dargestellt. Die Phasenverschiebung wird in jedem Falle eindeutig indiziert und kann somit zur Signalübertragung herangezogen werden. Die Zuordnung der Phasenlagen zu dem logischen Signal U1 (Blatt 3) für die Ruhestellung der Mikroeinheit erfolgt jedesmal nach Inbetriebnahme der Mikroeinheit über die Pegelfestlegung (Blatt 2).

Wie aus Blatt 4 ersichtlich, funktioniert die Datenübertragung auch zu Zeitpunkten, da nach dem Prinzip des Synchronschalters Daten übertragen werden, da die Phasenverschiebung hiervon unberührt bleibt. Außerdem ist aus Blatt 7 ersichtlich, daß günstige Verhältnisse für UE bei der Energieübertragung vorliegen, da unabhängig von der räumlichen Lage der Spulen und unabhängig von der Phasenverschiebung beide Übertragungswege zur Auswertung als Leistungsquelle zur Verfügung stehen.

Wie sich aus den vorstehenden Ausführungen ergibt, gewährleistet die erfindungsgemäße Einrichtung, daß parallel und gleichzeitig zu der Auswertung der Phasenverschiebung, die Übertragungsstrecke für den Synchronschalter benutzbar ist, d.h. entsprechende Informationen über die dieser Strecke zugeordneten Spulen gegeben werden können. Damit wird weder der Signalempfang von der Mikrostation noch das Signalsenden zur Mikrostation gestört. Je nach Anordnung der Spulen zueinander, die auch in sich gedreht sein dürfen, erfolgt erst nach einem "Reset" der Mikroeinheit die logische Zuordnung des Ausgangssignales (UI, Blatt 3 + 5) zu den entsprechenden Phasenlagen.

**Ansprüche**

1. Einrichtung zur berührungslosen Daten- und Energieübertragung, bestehend aus einem unbeweglichen Teil (Mikrostation), mit einem Oszillator zur kontaktlosen Leistungsübertragung mit Hilfe von mindestens einem Spulenpaar an einen beweglichen Teil (Mikroeinheit), wobei eine Datenübertragung vom beweglichen zum unbeweglichen Teil durch Belastungsänderung erfolgt, wobei Mittel vorgesehen sind, derart, daß

   a) die Schwingung des Oszillators (1) in zwei getrennte Schwingungen (Q1, Q2) aufgespalten wird, wobei der einen Schwingung (Q2) in Abhängigkeit von den zu übertragenden Daten (TM1) eine Phasenverschiebung gegenüber der anderen Schwingung (Q1) aufgezwungen wird,

   b) diese phasenverschobene Schwingung (TM2) über ein erstes Spulenpaar (S2, S3), die andere Schwingung (Q1) über ein zweites Spulenpaar (S1, S4) der Mikroeinheit (6) zugeführt wird, wobei die Leistungsübertragung mit Hilfe der beiden Schwingungen (Q1, TM2) über dieselben Spulenpaare (S2, S3; S1, S4) erfolgt,

   c) in der Mikroeinheit (6) die übertragenen Schwingungen einem Phasenvergleicher (IC2, IC3) zugeführt werden, welcher aus der Phasenverschiebung die Daten wieder gewinnt,

   d) die Datenübertragung von der Mikroeinheit (6) zur Mikrostation (4) durch gleichzeitige Belastungsänderung an den beiden Spulen (S3, S4) der Mikroeinheit erfolgt, wodurch gewährleistet ist, daß an einer der beiden Spulen (S1, S2) der Mikrostation auch bei vertauschter Zuordnung der Spulenpaare ein Nachweis der Belastungsänderung möglich ist.

**Claims**

1. Device for non-contacting data and energy transmission having a stationary part (microstation), with an oscillator for non-contacting power transmission by means of at least one pair of coils on a movable part (microunit), at which a data transmission from the stationary to the movable part occurs through change of load, at which means are provided, in such a manner that

   a) the oscillation of oscillator (1) is parted into two separate oscillations (Q1, Q2), at which on one of the oscillations (Q2) in dependence on the data to be transmitted (TM1), a phase shift is forced upon opposite to the other oscillation (Q1),

   b) this phase shifted oscillation (TM2) over a first pair of coils (S2, S3), the other oscillation (Q1) over a second pair of coils is led to the microunit (6), at which the power transmission is effected by means of both oscillations (Q1, TM2) over the same pairs of coils (S2, S3; S1, S4),

   c) in the microunit (6) the transmitted oscillations are led to a phase comparator (IC2, IC3), which again obtains the data from phase shift,

   d) the data transmission from microunit (6) to microstation (4) is effected through simultaneous change of load at both of the coils (S3, S4) of the microunit, whereby it is guaranteed that on one of the two coils (S1, S2) of microstation a proof of load also with changed allocation of the pairs of coils is possible.

**Revendications**

1. Dispositif pour la transmission, sans contact, de données et d'une énergie, constitué par une partie immobile (micro-station), comportant un oscillateur servant à transmettre l'énergie sans contact à l'aide d'au moins un couple de bobines à une partie mobile (micro-unité), et dans lequel une transmission de données de la partie mobile à la partie immobile est réalisée au moyen d'une modification de charge, des moyens étant prévus de telle sorte que

   a) l'oscillation de l'oscillateur (1) est subdivisée en deux oscillations séparées (Q1,Q2), un déphasage étant imposé à une oscillation (Q2) par rapport à l'autre oscillation (Q1), en fonction des données (TM1) devant être transmises,

   b) cette oscillation déphasée (TM2) est envoyée par l'intermédiaire d'un premier couple de bobines et l'autre oscillation (Q1) est envoyée par l'intermédiaire d'un second couple de bobines (S1,S4) à la micro-unité (6), la transmission d'énergie s'effectuant à l'aide des deux oscillations (Q1,TM2) par l'intermédiaire du même couple de bobines (S2,S3;S1,S4),

c) dans la micro-unité (6), les oscillations transmises sont envoyées à un comparateur de phase (IC2,IC3), qui récupère à nouveau les données à partir du déphasage,

d) la transmission de données de la micro-unité (6) à la micro-station (4) est réalisée au moyen d'une modification simultanée de charge dans les deux bobines (S3,S4) de la micro-unité, ce qui garantit que, dans l'une des deux bobines (S1,S2) de la micro-station, une détection de la modification de charge est possible même dans le cas de l'association permutée des couples de bobines.

Fig. 1

# F i g. 2

μ C-Takt     ø  → F

$U_A$

UNTER-
SETZER
1/2    μC-Takt ø/2 → G

A    ~    +

PHASEN-
AUS-
WERTUNG   $U_P$   PEGEL-
FEST-
LEGUNG    Daten von der Station → I

B    ~    −

$\overline{RESET}$   RESET   $\overline{RESET}$ → K

GLEICHRICHTUNG I

$U_C$

C    ~    +    $U_E$    +5V
REGLER    +5V Betriebsspannung → N

SIEBUNG

5V
BEGREN-
ZUNG    Daten zur Station → O

D    ~    −       M

GLEICHRICHTUNG II

EP 0 185 610 B1

Fig,3

# Fig.4

DATENAUSWERTUNG
PHASENVER-
SCHIEBUNG

SPULENSPANNUNG I
MICROSTATION

SPULENSPANNUNG II
MICROSTATION

DATENAUSWERTUNG
AMPLITUDE

Ausschnitt
Phasensprung

EP 0 185 610 B1

Fig.5

EP 0 185 610 B1

SPULENLAGE I    (oder)    SPULENLAGE II

SCHALT-ZUSTAND I

$U_A$  $U_C$  $U_P$

(oder)

SCHALT-ZUSTAND II

$U_A$  $U_C$  $U_P$

Fig.6

EP 0 185 610 B1

Fig.7